# EUROPEAN PATENT APPLICATION

(11) **EP 2 281 784 A1**
(43) Date of publication of application: **09.02.2011**
(21) Application number: 10251199.5
(22) Date of filing: 02.07.2010
(51) Int. Cl.: C02F 1/68, C02F 5/10, C02F 1/70, C02F 103/10

(54) **Environmentally benign water scale inhibitor compositions and method for making and using same**

(30) Priority: 02.07.2009 US 497399
(71) Applicant: Clearwater International LLC, Houston, TX 77027 (US)
(72) Inventor: Falana, Olusegun Matthew, San Antonio, Texas 78253 (US); Shah, Khalid Ali, Calgary, Alberta T3G 3SG (CA)
(74) Representative: Shanks, Andrew

(57) **Abstract**

Scale inhibition compositions and methods for use are disclose, where the composition including one or a plurality chelating agents, one or a plurality dispersing agents, one or a plurality of oxygen scavenging agents including one sugar alcohol or a plurality of sugar alcohols, and pH adjusted to a pH greater than about 9.

## Description

### BACKGROUND OF THE INVENTION

### 1. Field of the Invention

Embodiments of the present invention relate to composition for use in drilling, completing and fracturing formations including an environmentally benign scale inhibitor.

More particularly, embodiments of the present invention relate to composition for use in drilling, completing and fracturing formations, where the composition includes an effective of an environmentally benign water scale inhibitor.

### 2. Description of the Related Art

Historically, several scale inhibitors have been developed for water boilers, heat exchangers and similar systems. Generally, the choice of controlling scale is dependent on water chemistry and equipment. Thus, in some systems use of chemicals (antiscalants) might be combined with mechanical means to control scale formation. While mechanical control means include filtration, sedimentation filtration and clarification (coagulation and flocculation); scales can also be controlled chemically using dispersants such as polyphosphates, phosphonates, synthetic polymers and their blends. See, e.g., U.S. Pat. Nos 7,087,189 and 5,024,783. Though polyphosphates have low toxicity to the environment (Zahid Amjhad, NACE-96-230), orthophosphates that are toxic to algae are easily formed at proper pH, temperature, polyphosphate concentration and water chemistry.

Although scale inhibitors, either alone or in combination with mechanical scale reduction means are known in the art, there is still a need in the art of scale inhibitors operable in aqueous environments that are environmentally benign and yet effective and do not suffer from the negative environmental problems associated with the use of polyphosphates and phosphonates based scale inhibitors or antiscalants.

### SUMMARY OF THE INVENTION

According to a first aspect of the present invention there is provided an environmentally benign scale inhibiting composition for boilers or other equipment in contact with water containing scale forming contaminants comprising:
one or a plurality chelating agents,
one or a plurality dispersing agents, and
one or a plurality of oxygen scavenging agents including one sugar alcohol or a plurality of sugar alcohols, and
pH adjusted to a pH greater than about 9.

The alcohol sugar may be selected from a group consisting of D-Sorbitol, D-Mannitol, Xylitol, ascorbic acid or erythorbic acid and their salts or mixtures or combinations thereof.

The alcohol sugar may be selected from a group consisting of D-Sorbitol, D-Mannitol, Xylitol, or mixtures or combinations thereof.

The alcohol sugar may comprises D-Sorbitol.

The composition may be diluted in water.

The composition may include 80 wt.% water.

The composition may include between about 60 wt.% to about 20 wt.%.

The composition may include between about 50 wt.% to about 20 wt.%.

The composition may include between about 40 wt.% to about 20 wt.%.

The composition may include between about 50 wt.% to about 30 wt.%.

According to another aspect of the present invention, there is provided a method for treating a fluid including scale forming contaminants in contact with a surface comprising:
adding, to the fluid to be treated, an effective amount of a scale inhibiting composition comprising:
   one or a plurality chelating agents,
   one or a plurality dispersing agents, and
   one or a plurality of oxygen scavenging agents including one sugar alcohol or a plurality of sugar alcohols, and
   pH adjusted to a pH greater than about 9,
   where the amount is sufficient to reduce or prevent scale deposits on surfaces in contact with the fluid.

The alcohol sugar may be selected from a group consisting of D-Sorbitol, D-Mannitol, Xylitol, ascorbic acid or erythorbic acid and their salts or mixtures or combinations thereof.

The alcohol sugar may be selected from a group consisting of D-Sorbitol, D-Mannitol, Xylitol, or mixtures or combinations thereof.

The alcohol sugar may comprise D-Sorbitol.

The effective amount may be a concentration less than or equal to 1500 ppm.

The effective amount may be a concentration less than or equal to 1250 ppm.

The effective amount may be a concentration less than or equal to 1000 ppm.

The effective amount may be a concentration less than or equal to 250 ppm.

The effective amount may be a concentration between about 50 ppm and 5000 ppm.

The effective amount may be a concentration between about 100 ppm and 500 ppm.

According to another aspect of the present invention, there is provided a method comprising:
adding an effective amount of a scale inhibiting composition to a fluid including scale forming contaminants on a continuously, semi-continuously, periodically and/or intermittently basis,
where the composition comprises:
   one or a plurality chelating agents,
   one or a plurality dispersing agents, and
   one or a plurality of oxygen scavenging agents including one sugar alcohol or a plurality of sugar alcohols, and
   pH adjusted to a pH greater than about 9, and
where the fluid is in contact with a surface or surfaces upon which can form and
where the effective amount is sufficient to reduce or prevent scale deposits on the surfaces.

The alcohol sugar may be selected from a group consisting of D-Sorbitol, D-Mannitol, Xylitol, ascorbic acid or erythorbic acid and their salts or mixtures or combinations thereof.

The alcohol sugar may be selected from a group consisting of D-Sorbitol, D-Mannitol, Xylitol, or mixtures or combinations thereof.

The alcohol sugar may comprise D-Sorbitol.

The effective amount may be a concentration less than or equal to 1500 ppm.

The effective amount may be a concentration less than or equal to 1250 ppm.

The effective amount may be a concentration less than or equal to 1000 ppm.

The effective amount may be a concentration less than or equal to 250 ppm.

The effective amount may be a concentration between about 50 ppm and 5000 ppm.

The effective amount may be a concentration between about 100 ppm and 500 ppm.

Embodiments of the present invention provide an environmentally benign and economical scale inhibiting composition for boilers or other equipment in contact with water containing scale forming contaminants. The composition comprises a blend of one or a plurality chelating agents, one or a plurality dispersing agents, and one or a plurality of oxygen scavenging agents, pH adjusted to a pH greater than about 9. The blend can be diluted in water. Thus, the blend can be used neat or in an aqueous dilution down to about 20 wt.%. In certain embodiments, the blend is diluted in water at a concentration between about 60 wt.% to about 20 wt.%. In certain embodiments, the blend is diluted in water at a concentration between about 50 wt.% to about 20 wt.%. In certain embodiments, the blend is diluted in water at a concentration between about 40 wt.% to about 20 wt.%. In certain embodiments, the blend is diluted in water at a concentration between about 50 wt.% to about 30 wt.%. In certain embodiments, the blend is present in a solution to be treated in concentration less than or equal to 1500 ppm. In certain embodiments, the blend is present in a solution to be treated in concentration less than or equal to 1250 ppm. In certain embodiments, the blend is present in a solution to be treated in concentration less than or equal to 1000 ppm. In certain embodiments, the blend is present in a solution to be treated in concentration less than or equal to 750 ppm. In certain embodiments, the blend is present in a solution to be treated in concentration less than or equal to 500 ppm. In certain embodiments, the blend is present in a solution to be treated in concentration less than or equal to 250 ppm. In certain embodiments, the blend is present in a solution to be treated in concentration is between about 50 ppm and 5000 ppm. In certain embodiments, the blend is present in a solution to be treated in concentration is between about 100 ppm and 2500 ppm. In certain embodiments, the blend is present in a solution to be treated in concentration is between about 150 ppm and 2000 ppm. In certain embodiments, the blend is present in a solution to be treated in concentration is between about 200 ppm and 2000 ppm. In certain embodiments, the blend is present in a solution to be treated in concentration is between about 200 ppm and 1000 ppm. In certain embodiments, the blend is present in a solution to be treated in concentration is between about 100 ppm and 500 ppm.

Embodiments of the present invention provide methods for treating a fluid including scale forming contaminants in contact with a surface upon which a scale deposit can form including adding to the fluid an effective amount of a scale inhibiting composition of this invention, where the amount is sufficient to reduce or prevent scale deposits on the surfaces.

Embodiments of the present invention provide methods for treating a fluid including scale forming contaminants in contact with a surface upon which a scale deposit can form including continuously, semi-continuously, periodically and/or intermittently adding to the fluid an effective amount of a scale inhibiting composition of this invention, where the amount is sufficient to reduce or prevent scale deposits on the surfaces.

### DETAILED DESCRIPTION OF THE INVENTION

The inventors have found that an environmental benign antiscalant or scale inhibiting composition can be formulated for use in aqueous environments contaminated with scale forming salts such as calcium sulfate, calcium carbonate, iron and magnesium oxides or hydroxides or the like. The scale inhibiting composition includes a chelating agent, a dispersant, an oxygen scavenger and a base, where the base is used to adjust the pH of the composition, but no additional base is required during the use of the composition. Each component of the composition is biodegradable and benign to the environment. Not only is the composition effective and efficient at low concentrations, like polyphosphate inhibitors, it is uniquely more economical than the phosphate or phosphonate inhibitors or other competitive products in the market. A water solution of this composition was found to be stable to temperature up to -15°F without use of any pour point depressants. Unlike most known water scale inhibitors, this novel formulation precludes use of inorganic bases for pH adjustment during use, thereby eliminating handling of hazardous astringents and reducing chemical consumption and the need for additional equipment.

The inventors have found that a composition of this invention designated **SI1,** when added to a fluid including calcium and magnesium scale forming contaminants at 0.5 wt.% of a 35.1 wt.% solution of the composition corresponding to a 17.55 ppm treatment offered complete inhibition of calcium or magnesium scale deposit, where the calcium and magnesium concentrations were ≤250 ppm, which is higher than the concentration commonly found in boilers, which is generally <200 ppm. SI1 comprises sodium ethylenedimaine tetraacetate (EDTA), a metal chelating agent, FLOSPERSE™ 1000 A and sodium lignosulfonate, polyelectrolytes dispersing agents and d-sorbitol, an oxygen inhibiting agent. SI1 is essentially an environmentally benign product, eliminates the need and cost of chemicals for pH adjustment during use, and is recommended as scale inhibitor in boilers. However, this product inhibits higher than 250 ppm concentrations of multi-cations (see Example 2) and might find uses in other markets including water treatment.

### SUITABLE REAGENTS OF THE INVENTION

Suitable chelating agents include, without limitation, alkaline earth salt of ethylene diamine tetraacetic acid (EDTA), such as sodium EDTA salt, potassium EDTA salt; ethylenediamine tetrakis(alkoxylate) tetrols, nitrilotriacetonitrile or its derivatives or mixtures or combinations thereof.

Suitable polyelectrolytes or dispersants include, without limitation, polycarboxylate dispersants such as the FLOSPERSE^{™} including FLOSPERSE^{™} 1000 A, sodium lignosulfonates, potassium lignosulfonates, cesium lignosulfonates, BELCLENE^{®} 200 (BC), polymaleic acid (PMA), lignosulphonate sodium salt (LGS), 2-acrylamido-2-methylpropane sulfonic acid homopolymers such as AMPS^{®} products (a registered trademark of Lubrizol Corporation), and mixtures or combinations thereof.

Suitable oxygen scavengers include, without limitation, sugar alcohols like D-Sorbitol, D-Mannitol, Xylitol; ascorbic acid or erythorbic acid and their salts or mixtures or combinations thereof.

Suitable base include, without limitation, such as sodium hydroxide, potassium hydroxide, cesium hydroxide, sodium carbonate, potassium carbonate, sodium oxide, cesium oxide, potassium oxide or mixtures or combinations thereof. This invention is illustrated by the following examples.

### EXPERIMENTS OF THE INVENTION

### EXAMPLE 1

### General Procedure

A formulation (Formula Y) with constituents presented in **Table 1** was prepared by adding each component beginning with the addition of sodium hydroxide to measured amount of distilled water. To this solution was added the indicated amount of EDTA or other chelating agent. The resulting solution was then stirred for 30 minutes. To the resulting solution was added the indicated amount of lignosulfonate or similar polyelectrolyte, in four portions with a 30 minute stir time between each addition. After the last 30 minute stir time, the indicated amount of D-Sorbitol or other O₂ inhibitor was added and the resulting solution is stirred for 10 minutes. To this solution was added the indicated amount of FLOSPERSE™ 1000A, or other comparable polyelectrolyte, all at once and stirred for 10 minutes. The solution was then tested for pH, usually between pH 10 and pH 11.5. The specific gravity of the final product should be between 1.16 and 1.20.

**TABLE 1**

| **Example 1 Formula Y Components and Amounts** | |
|---|---|
| **Component** | **Amount (wt.%)** |
| FLOSPERSE 1000A | 12.00 |
| EDTA | 10.00 |
| Sodium Lignosulfonate | 12.00 |
| D-Sorbitol | 2.00 |
| Sodium Hydroxide (50%) | 15.00 |
| Distilled Water | 49.00 |
| Total | **100.000** |

### Testing

Formula Y (FY) was used in two boilers at 250°F on a drilling site. The results of the trial with the composition was quite impressive. Water analysis (see **Table 2)** showed that calcium carbonate and iron levels stayed below detectable levels indicating minimal scaling.

**TABLE 2**

| **Water Analysis** | |
|---|---|
| **Results** | |
| pH | 10 |
| Calcium | 0.0 |
| Hardness | 100 ppm |
| Iron | 0 |
| Magnesium | 0 |
| Chloride | 100 ppm |

Once the pH was properly set, there was no need to add caustic to the composition during use, unlike many other scale inhibitors. For the field trials only 18 gallons of product in example I (FY) were used for 190 barrels of water compared to 35 gallons of phosphate based inhibitor without accounting for additional usual caustic consumption.

### EXAMPLE 2

Using NACE Standard TM 0197-2002, a sample of Formula Y (example 1) was tested against WFT commercial product Alpha 2867 at 208°F. Thus, to an untreated brine (**Blank, 6**) and 2 jars were added 350 ppm brine. The 2 jars **(3,** containing FY; and **5, WFT A2867)** were treated with 0.5 % of corresponding scale inhibitors, see **Table 3.** Similar treatments was carried out at 1.0 % concentration with FY scale inhibitor **(Table 3).** Results show that FY inhibits satisfactorily at both 0.5 (or 17.6 ppm) and 1.0 % whereas **WFT A2867** failed. Essentially, complete inhibition is suggestive of overtreatment at 0.5 % inhibitor (FY) concentration in 350 ppm brine containing 522 ppm Ca²⁺ and 21 ppm Mg²⁺.

**TABLE 3**

| **Jar Test Treatment of Brines with Scale Inhibitors** | | | | | |
|---|---|---|---|---|---|
| **Brine Concentration (ppm)** | **Bottle** # | **Scale Inhibitor** | **Scale Inhibitor (wt.%)** | **Scale Inhibitor (mL)** | **Observation** |
| 350 | 1 | Brine A | NA | NA | NA |
| | 2 | Brine B | NA | NA | NA |
| **350** | **3** | **Formula Y** | **0.50** | **0.5** | **No Scale** |
| | **4** | **Formula Y** | **1.00** | **1.0** | **No Scale** |
| **350** | **5** | **WFT A2867** | **0.50** | **0.5** | **Scaled** |
| **350** | **6** | **Blank (A+B)** | **NA** | **NA** | **Scaled** |
| 350 | 7 | Control (A+C) | NA | NA | NA |

### Temperature Stability

In North America and some cold regions of the globe, pourability of the inhibitor in cold temperatures is critical. Therefore, pour point of FY was determined. FY remains fluid up to -10°C (14°F) or have a freezing point of -15°C (5°F). A formulation containing 10 wt.% ethylene glycol (EG) has a pour point below -45°C (-49°F)and therefore suitable for use when environmental temperature is expected to be below -10°C while unmodified FY is desirable at or above 10°C.

All references cited herein are incorporated by reference. Although the invention has been disclosed with reference to its preferred embodiments, from reading this description those of skill in the art may appreciate changes and modification that may be made which do not depart from the scope and spirit of the invention as described above and claimed hereafter.

## Claims

1. An environmentally benign scale inhibiting composition for boilers or other equipment in contact with water containing scale forming contaminants, the composition comprising:
at least one chelating agent,
at least one dispersing agent, and
at least one oxygen scavenging agent including one sugar alcohol or a plurality of sugar alcohols,
the pH adjusted to a pH greater than about 9.

2. The composition of claim 1, wherein the alcohol sugar is selected from a group consisting of D-Sorbitol, D-Mannitol, Xylitol, ascorbic acid or erythorbic acid and their salts or mixtures or combinations thereof.

3. The composition of claim 1, wherein the alcohol sugar selected from a group consisting of D-Sorbitol, D-Mannitol, Xylitol, or mixtures or combinations thereof.

4. The composition of claim 1, wherein the alcohol sugar comprises D-Sorbitol.

5. The composition of any one of claims I to 4, wherein the composition is diluted in water.

6. The composition of claim 5, wherein the diluted composition includes 80 wt.% water.

7. The composition of claim 5, wherein the composition is diluted in water at a concentration between about 60 wt.% to about 20 wt.%,
and optionally between about 50 wt.% to about 20 wt.%,
and optionally between about 40 wt.% to about 20 wt.%,
and optionally between about 50 wt.% to about 30 wt.%.

8. A method for treating a fluid including scale forming contaminants in contact with a surface, the method comprising:
adding an effective amount of the composition of any one of claims 1 to 7 to the fluid to be treated, where the effective amount is sufficient to reduce or prevent scale deposits on surfaces in contact with the fluid.

9. The method of claim 8, comprising adding the effective amount of the composition on a continuous, semi-continuous, periodic and/or intermittent basis.

10. The method of claim 8 or 9, wherein the effective amount is a concentration less than or equal to 1500 ppm.

11. The method of claim 8 or 9, wherein the effective amount is a concentration less than or equal to 1250 ppm.

12. The method of claim 8 or 9, wherein the effective amount is a concentration less than or equal to 1000 ppm.

13. The method of claim 8 or 9, wherein the effective amount is a concentration less than or equal to 250 ppm.

14. The method of claim 8 or 9, wherein the effective amount is a concentration between about 50 ppm and 5000 ppm.

15. The method of claim 8 or 9, wherein the effective amount is a concentration between about 100 ppm and 500 ppm.
